# NEW EUROPEAN PATENT SPECIFICATION

(11) **EP 1 422 078 B2**
(45) Date of publication and mention of the opposition decision: **05.09.2012**
(45) Mention of the grant of the patent: 23.07.2008
(21) Application number: 02425714.9
(22) Date of filing: 21.11.2002
(51) Int. Cl.: B60B 1/04

(54) **Spoked wheel for a bicycle**
Speichenrad für ein Fahrrad
Roue à rayons pour une bicyclette

(43) Date of publication of application: 26.05.2004
(73) Proprietor: Campagnolo S.r.l., 36100 Vicenza (VI) (IT)
(72) Inventor: Meggiolan, Mario, 36051 Creazzo (Vicenza) (IT); Passarotto, Maurizio, 45100 Rovigo (IT)
(74) Representative: Checcacci, Giorgio

(56) References cited:
- EP-A- 1 207 053
- DE-A- 4 212 094
- DE-A- 4 444 044
- US-A- 2 937 905

## Description

The present invention concerns a bicycle spoked wheel, a rim and a spoke set for such a wheel, a process intended for manufacturing a spoked wheel for a bicycle, as well as a kit of parts intended to cooperate with the wheel.

A spoked wheel for a bicycle comprises a peripheral crown or rim, a central hub and a plurality of spokes extending between the hub and the rim, the tension of which must preferably be adjustable at the hub and/or at the rim.

To allow tension adjustment, usually a threading is provided at an end of the spokes and a threaded hole attachment is provided at the hub or the rim, respectively. The second end of the spokes can be provided with a second threading or a head, for example rectangular or circular, housed in a suitable seat, for example hooked in a hub flange or inserted in a bayonet coupling at the rim, respectively.

Rims having a channel, with fins where the beads of the tire are coupled and at the base of which a plurality of holes are made, are known. The holes receive a spoke attachment element provided with a hole with a shaped seat or with a threaded hole. The length of the hole threading of the spoke attachment element can be equal to the spoke threading, or else longer to also allow tension adjustment of the spoke by varying the screwing in depth of the spoke in the threaded hole of the spoke attachment element.

The spoke attachment elements are also called "nipples", if they allow the tension adjustment of the spoke, or else "barrels" if they do not allow this.

Such type of single channel rims have low structural stiffness and therefore greater deformability from lateral and radial loads. Moreover, such single channel rims are not suitable for use with tubeless tires since the coupling channel is not airtight.

To increase structural stiffness, rims having a circumferentially external tire coupling channel and a circumferentially internal spoke attachment chamber are also known. More specifically, such rims are made up of two side walls connected or filleted to one end by a circumferentially internal wall or lower bridge and at an intermediate point by a circumferentially external wall or upper bridge or partition, so as to have a substantially inverted A-shaped cross-section. The circumferentially external portions of the side walls, typically provided with a border, form the tire coupling channel with the upper bridge or partition, whereas the circumferentially internal portions of the side walls form, with the lower bridge and the upper bridge, a spoke attachment chamber.

Instead of a single chamber, two or more chambers can be provided through one or more partition walls, extending substantially parallel to the upper bridge or substantially transverse to it. Each wall (upper bridge, lower bridge, side and partition walls), can also be shaped in various ways, forming an even remarkably complex cross section of the rim.

Rims of this type can be manufactured by casting of carbon fibre (see for example the European patent application of the same Applicant published with No. 1.231.077 A2). Alternatively, such rims are manufactured by extrusion of an aluminium profiled bar. The profiled bar is shaped as a circle typically by calendering and its terminal ends are joined by welding, for example flash welding or TIG welding, by cementing after insertion of a metallic sleeve, by pin-connection or otherwise.

In this type of rims there is the problem of how to attach spokes in respective spoke attachment seats provided in the spoke attachment chamber(s), normally through the aforementioned spoke attachment elements.

In a first solution, described in US patent No. 5.975.646 of Campagnolo, this is carried out by forming a plurality of access openings in the upper bridge, each at a respective spoke attachment seat. Such access openings allow insertion of the spoke attachment elements (nipples or barrels) and of the tool for screwing them onto the spokes or for holding them during the attachment of the spokes. To preserve a suitable structural stiffness of the rim, the upper bridge must however be formed with a remarkable thickness, with a consequent undesirable weight increase of the rim. Moreover, such a rim is not suitable for tubeless tires since the tire coupling channel is not airtight due to the aforementioned access openings.

US patent application US2001/0019222 A1 of Campagnolo, to avoid this and to provide a rim in which the upper bridge has only the hole for the inflation valve for the tire and therefore sufficiently rigid and light, as well as suitable for use with tubeless tires, proposes to use supports having a seat for supporting a respective nipple at least partially outside of the rim section. Each nipple support more specifically comprises a substantially U-shaped bracket having said seat and hung on a pivot extending transversally between a pair of non-threaded holes formed in the side walls of the circumferentially internal chamber, or in flanges protruding from the side walls of the circumferentially internal chamber.

Regarding such a solution, the Applicant observes that, besides the nipples, additional elements are necessary, with consequent additional assembling steps and greater weakness points in the wheel.

Other known solutions for providing a rim in which the upper bridge has just the hole for the inflation valve of the tire and therefore sufficiently rigid and light, as well as suitable for use with tubeless tires, are described in European patent applications EP 0 896 886 A1, EP 1 101 631 A1, EP 1 167 078 A1, all of Mavic S.A. In all three of such documents it is proposed to form the spoke attachment seats as threaded holes in which to screw, from the outside of the chamber, a threaded end of a spoke, a spoke attachment element such as a nipple or a barrel, or an insert in which to insert a nipple or a barrel. Since the thickness of the rim walls must be small for weight reasons, it is necessary to form the threaded holes by material deformation, so that a "chimney" is created in which a threading of the required length can be formed.

Regarding these solutions, the Applicant observes that they are very complex and expensive since forming the threaded holes in the lower bridge or in any case in the walls of the circumferentially internal chamber is a difficult and complex process.

US-A-2,937,905 discloses a spoke connection for tubeless tire rims in which an anchor element is used to hold the nipple to the rim at respective apertures. The anchor element has a roughly rectangular shape and can be removed from the aperture by first removing the spoke from the nipple (thus leaving only the nipple associated to the anchor element) and then by tilting the anchor element to a slightly oblique position so that it can be removed through the aperture. Resulting rim is significantly weakened by the many and wide apertures.

Therefore, a simple and cost-effective solution to manufacture a spoked wheel for a bicycle, sufficiently strong whilst still being light, is still desirable.

Consequently, the present invention, in a first aspect thereof, concerns a spoked wheel for a bicycle according to claim 1; preferred features are addressed in dependent claims 2 to 14 In a wheel made in this way assembling the spoke attachment elements on the rim is very simple and cost-effective, from the outside. Moreover, the wheel has no portions which protrude in an anomalous manner: in practice, the wheel looks like a normal wheel.

The two configurations of the spoke attachment elements can be obtained in different ways.

For example, the spoke attachment element can comprise a shank and a head which is widened with respect to the shank, the head having a minimum width in a first direction and a maximum width in a second direction different to the first. The seat has a minimum width in a first direction and a maximum width in a second direction different to the first, the minimum width of the head is less than the minimum width of the seat and is greater than the minimum width of the seat.

Still as an example, the spoke attachment element can comprise a shaft and foldable wings attached to the shaft, the wings being mobile between a folded position in which they allow the insertion of the spoke attachment element in the inner chamber through the seat and an extended position in which they prevent the removal of the spoke attachment element through the seat.

Both of these embodiments allow an easy insertion of the head of the spoke attachment element in the opening in the rim, and an easy passage to the blocking configuration, through rotation of the spoke attachment element in the first case and through extension of the wings in the second case.

The invention is suitable for any type of spoked wheel for a bicycle, however it is particularly important for tubeless tires, i.e. when the rim has two sides joined together on a base and a bridge extending between the two sides so as to define an inner chamber enclosed between the bridge, the sides and the base, the openings of the seats being formed in the base, open to the inner chamber. Indeed, in this case, the impossibility of access to the inner chamber does not create any particular difficulty in assembling the spokes, which are in any case attached to the rim by inserting the attachment elements thereof from the outside in the respective seats.

In a preferred embodiment the spoke attachment element comprises a shank, the widened head being formed on the shank.

Preferably, in the attachment position the shank is free to rotate about a longitudinal axis of the spoke. This possibility of rotation can be exploited for the adjustment of the tension of the spoke, for example through a threaded coupling.

In an alternative embodiment, the widened head of the spoke attachment element is formed on the spoke.

In this embodiment, the ways of attaching the spoke to the rim do not change, whereas the tensioning of the spoke must be obtained with other means, for example associated with the hub.

Preferably, in attachment position the plate cannot rotate with respect to the rim, thus ensuring the stability of the attachment.

The opening which forms a seat in the rim can have different shapes. To simultaneously promote both the insertion of the plate in the first condition and its blocking in the second position, the opening preferably has an elongated shape, even more preferably elongated in a transverse direction with respect to the circumferential extension of the rim.

Preferably, the head has a conical contact surface with the plate and the plate has a corresponding conical contact surface with the head. Such a contact ensures better transmission of the traction forces between the spoke and the rim, stability of the attachment, and the spontaneous correct positioning of the various parts during assembling.

Preferably, the hole in the plate has at least one notch for receiving the spoke in the insertion position, even more preferably two opposite notches. By notch a cut is meant, extending on the plate from the hole towards the periphery of the plate itself, being of a shape and size such as to at least partly receive the spoke (or a false spoke) during assembling, when the plate is tilted to be inserted through the opening of the rim. The presence of one or more notches made in this way allows the plate to take on a more inclined position with respect to the spoke attachment element, making insertion of the plate through the seat easier.

Preferably, the spoke attachment element comprises a contact washer between the head and the plate. In such a way, the hole in the plate can be particularly wide, even wider than the head, thus at the same time ensuring a correct attachment and a wide possibility of inclination of the plate during insertion through the opening.

The spoke attachment element can be of different types. In a preferred embodiment the spoke attachment element of each spoke comprises a nipple, in adjustable screwing engagement with the spoke, the nipple including the head and the shank and being coupled to the plate. This embodiment thus allows the classic configuration with nipples of a normal bicycle wheel to be present on the wheel according to the invention.

In another preferred embodiment, the spoke attachment element of each spoke comprises a barrel, in attached engagement with the spoke, the barrel including the head and the shank and being coupled to the plate. This embodiment thus allows, on the wheel according to the invention, the configuration with barrels, in which the adjustment of the tension of the spokes is carried out at the attachment on the hub.

In a second aspect thereof, the present invention concerns a rim of a spoked wheel for a bicycle according to claim 15; preferred features are addressed by claims 16 and 17.

The elongated shape of the openings of the seats (instead of the conventional circular holes), preferably in a transverse direction with respect to the circumferential extension of the rim, allows the insertion from the outside of spoke attachment elements such as those described above.

In a third aspect thereof, the present invention concerns a spoke set for a bicycle wheel according to claim 18; preferred features are addressed by claims 19 to 26.

In a fourth aspect thereof, the present invention concerns a process intended for manufacturing a spoked wheel for a bicycle according to claim 27; preferred features are addressed by claims 28 to 30.

This process allows the spoke attachment elements to easily be associated with the rim, even when the rim structure has an inner chamber which is not accessible from the inside.

It is possible to easily mount the spoke attachment elements one after another, progressively blocking them as they are positioned, each of them waiting for a respective spoke to be fixed thereto.

The process can be carried out according to different embodiments depending on the wheel which it is intended to manufacture.

According to a preferred embodiment, the following step can be provided:
b1) providing a false-spoke associated with the respective spoke attachment element before having the spoke attachment element take on its first configuration.

In such a way it is possible to easily handle the spoke attachment element, without risking inadvertently making it fall in the inner chamber but also without having handling bulkiness due to the length of a spoke.

Finally, there is nothing to prevent the possible used holding elements from being left in the position in which they had been placed in step f). However, once the wheel has been completely assembled, such elements are totally useless and therefore the following step is preferably provided:
p) removing the possible holding elements from the spoke attachment elements.

The invention also refers to a kit of parts intended for cooperation with a wheel or with a rim of the aforementioned type, to implement a process as stated above, comprising a spoke set of the aforementioned type and a false-spoke consisting of a stem provided with a threading which matches that of the spoke set.

Further characteristics and advantages of the invention shall become clearer from the following description of some embodiments thereof, made with reference to the attached drawings. In such drawings:
- fig. 1 is a perspective view of a portion of wheel according to the invention, in a first step during assembling;
- fig. 2 is a further perspective view of the portion of wheel of fig. 1 in the same first step during assembling, taken from a different angle;
- fig. 3 is a partially sectioned perspective view of the portion of wheel of the previous figures in a second step during assembling;
- fig. 4 is a perspective view of the portion of wheel of fig. 3 in the same second step during assembling;
- fig. 5 is a perspective view of the portion of wheel of the previous figures in a third step during assembling;
- fig. 6 is a perspective view of the portion of wheel of fig. 5, taken from a different angle, at the end of the assembling step;
- figs. 7 and 8 are views of the plate illustrated in the wheel of figs. 1-6;
- figs. 9 and 10 are views of a different plate;

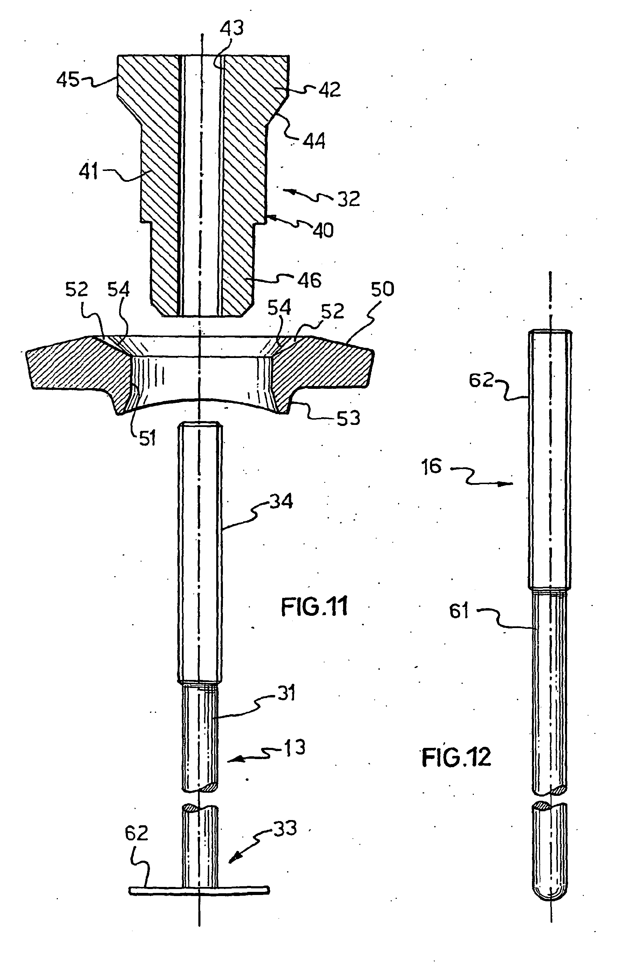

- fig. 11 is a section view of a spoke and its attachment elements in the wheel of figures 1 to 8;
- fig. 12 is a section view of a false spoke used in assembling a wheel according to the invention;
- fig. 13 is a partial perspective section view of a rim according to the invention;
- fig. 14 is a section view of a spoke and its attachment elements, according to an alternative embodiment of the invention;
- fig. 15 is a perspective view in partial section of the spoke of figure 14;
- fig. 16 is a perspective view of a spoke according to a different embodiment of the invention.

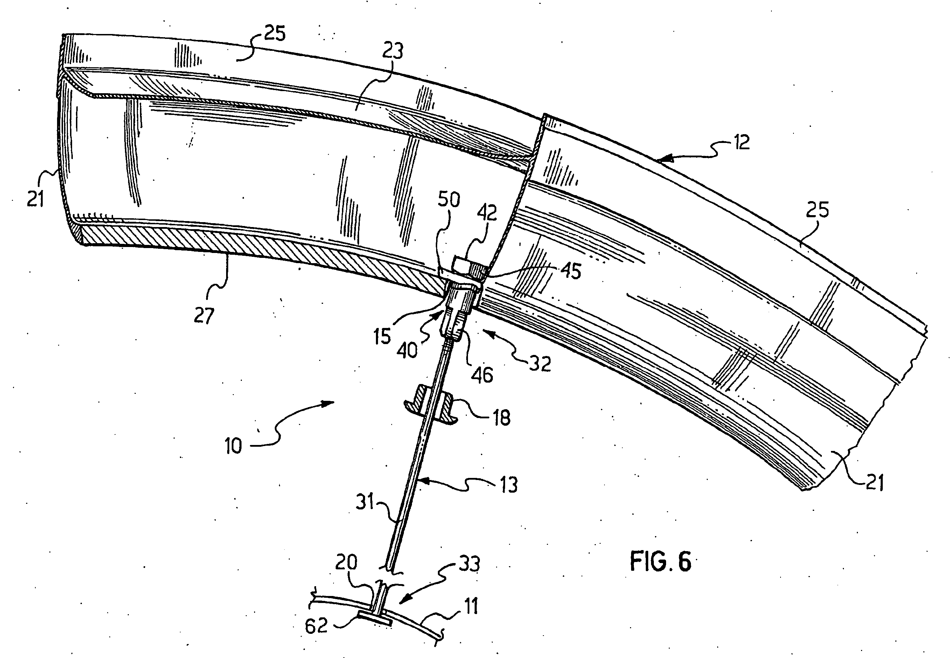

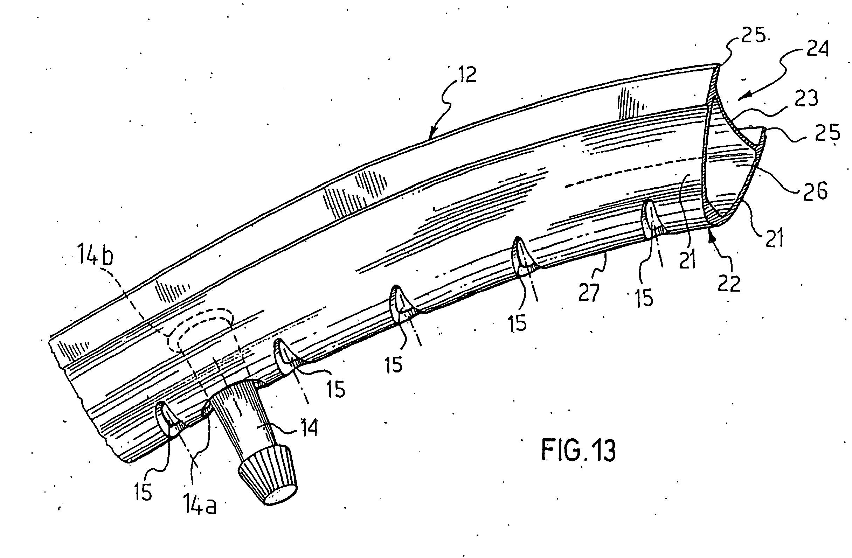

In the figures (in particular, see figures 6 and 13), a spoked wheel for a bicycle is wholly indicated with 10, comprising a hub 11, a rim 12 and a plurality of spokes 13, tensed between the rim 12 and the hub 11.

The rim 12 has a profiled structure having a substantially inverted A-shaped section, with two sides 21 which converge and are joined together to form a base 22, and a bridge 23 extending between the two sides 21. Thus an outer peripheral channel 24 for coupling to a tire, which is defined by the bridge 23 and by tire-holding fins 25 formed from the radially outer portions of the sides 21, and an inner chamber 26, defined by the bridge 23 and by the base 22, are defined on the rim 12. It should be noted that with the term base is meant not only the inner peripheral joining zone 27 between the two sides 21 (which in turn can be relatively narrow as in the illustrated example or else more or less wide), but more generally the portion of the sides 21 below the bridge 23.

The rim 12 is provided (in a *per se* known way) with an inflation valve, mounted in respective aligned holes 14a and 14b, the first formed in the base 22, the second in the bridge 23. It should be noted that if a tubeless tire (not illustrated) is mounted on the wheel 10, the valve 14 is mounted airtight on the hole 14b. If, on the other hand, a non-tubeless tire, with an inner tube is provided, the valve 14 is associated with the tube itself.

In accordance with the invention, the rim 12 is also provided with a plurality of seats 15 for coupling to the spokes 13, consisting of openings arranged in a regular manner along the base 22. In the preferred example illustrated, such seats 15 are aligned with each other at the inner peripheral zone 27. Alternatively, two or more series of seats, staggered from each other, can be provided. More generally, the number and distribution of the seats 15 for coupling to the spokes 13 can vary. For example, the seats 15 could be grouped together in groups of two, three or four and/or could be made on many planes, different from the middle plane of the rim 12. The seats 15 have an elongated shape, in a transverse direction with respect to the circumferential direction of extension of the rim 12, but they could be elongated in any direction and they could be orientated so as to help the attachment of the spokes with different inclinations.

Each of the spokes 13 comprises an elongated stem 31 and is provided at the opposite ends with two spoke attachment elements, one spoke attachment element 32 facing towards the rim 12 and another spoke attachment element 33 facing towards the hub 11. With the term spoke attachment element a component is meant that is associated with the spoke 13, or else a set of components associated with the spoke 13 or even a particular configuration of the spoke 13 itself which allows the spoke 13 to be attached to the rim 12 or to the hub 11 so that the necessary traction force can be transmitted.

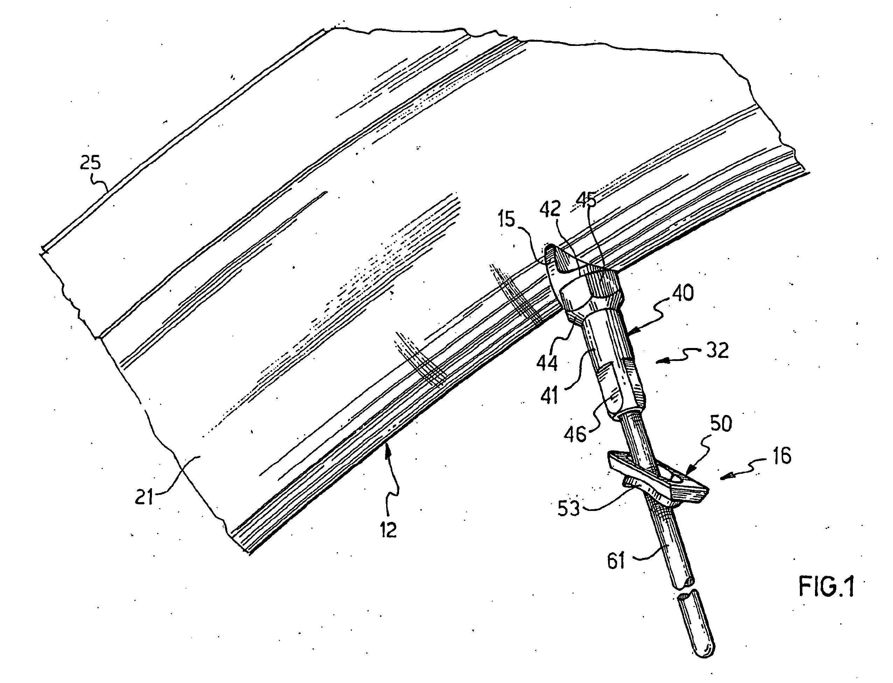

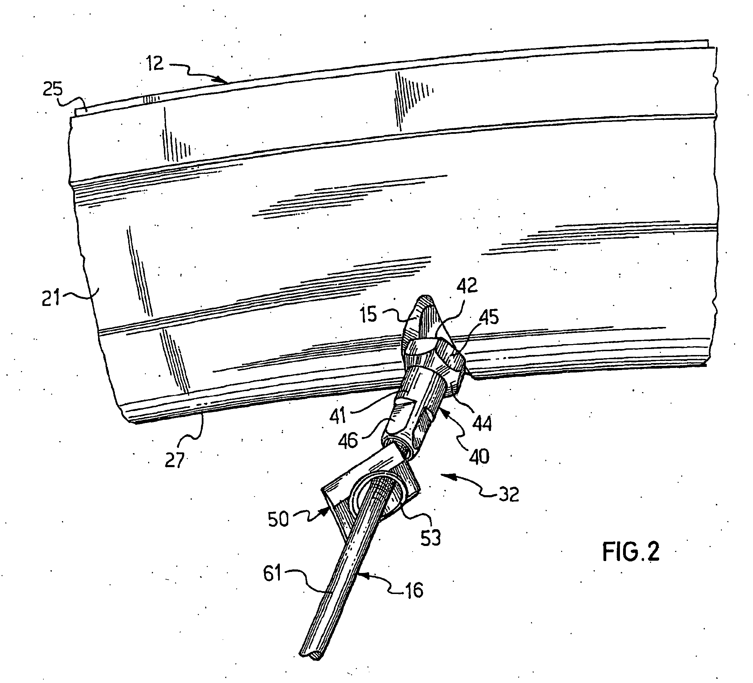

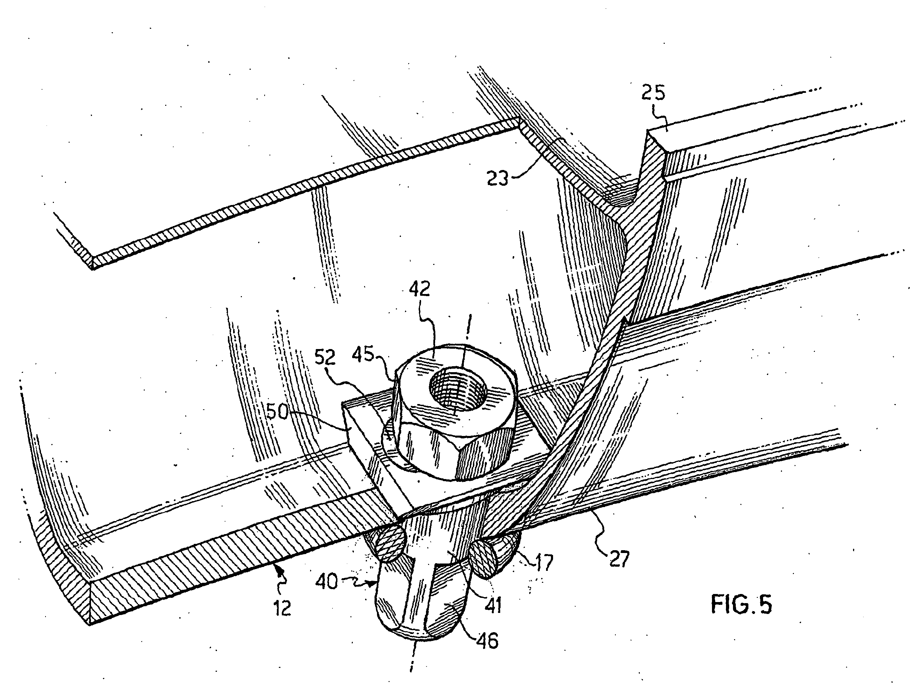

The spoke attachment elements 32 and 33 can take on different configurations according to the different embodiments of the invention. In the preferred embodiment, shown in figures 1-6, the spoke attachment element 32 comprises a nipple 40 and a plate 50.

The nipple 40 has a shank 41, elongated in the direction of the spoke 13 to which it is coupled, and a head 42 protruding from the shank 41. The shank 41 is provided with a threaded axial inner hole 43, in a screw-adjustable coupling to a corresponding threaded portion 34 of the stem 31 of the spoke 13. The head 42 has a smooth conical contact surface 44 with the plate 50, and a polygonal peripheral surface 45. The shank 41 also has a polygonal peripheral surface 46, which can be operated with a suitable key.

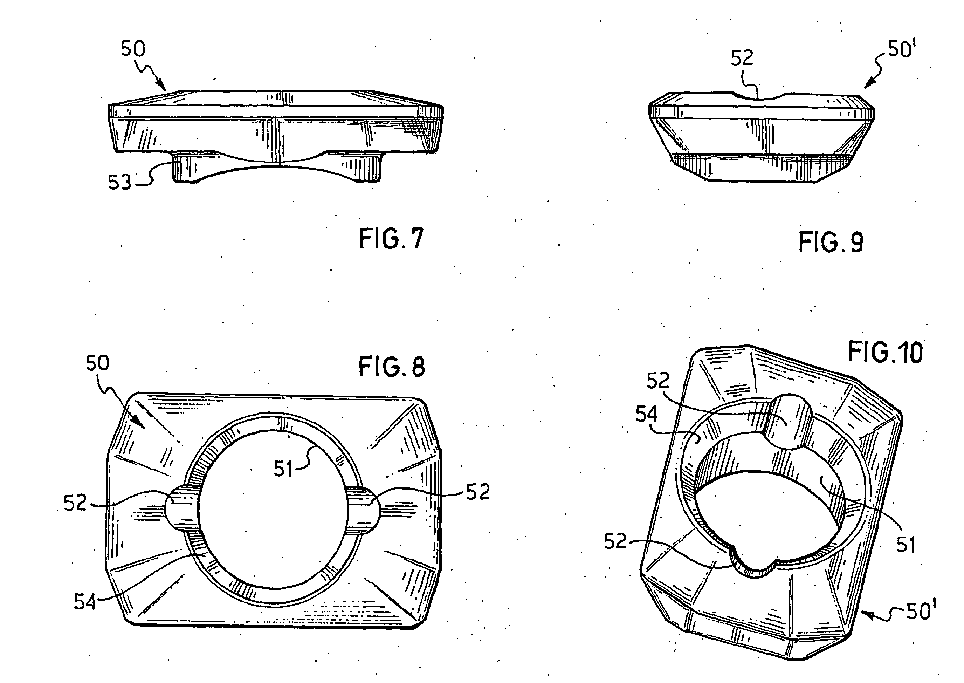

The plate 50 (also see figures 7 and 8) has a flattened rectangle overall configuration, with an inner hole 51, flanked by notches 52, or else cuts extending from the hole 51 towards the outside of the plate. More precisely, such cuts are oriented in the direction of the largest dimension of the plate 50, and they have a function linked to wheel assembling, as shall be seen hereafter. Around the inner hole 51, from the side facing towards the seat 15, the plate 50 is provided with a collar 53, which protrudes from the plate 50 itself and is housed in the seat 15. Around the collar 53, the plate 50 is preferably shaped to match the inner shape of the base 22 of the rim 12. On the other side, conversely, around the same inner hole 51, the plate 50 has a smooth conical contact surface 54 to the nipple 40, in contact engagement with the corresponding conical surface 44 of the nipple 40. Given the contact between the two conical surfaces 44 and 54, the nipple 40 is free to rotate about the axis of the spoke 13, even when the spoke 13 is tensed. The plate 50, instead, is not free to rotate with respect to the rim 12, being shaped so as to match the inner shape of the base 22 of the rim 12.

Advantageously, it can be provided to insert slideable sealing gaskets 18 (preferably made from rubber), of a suitable shape and size which, at the end of the attachment process of the spokes 13 to the rim 12, are displaced so as to be inserted in the openings 15 and to completely close any empty space. Alternatively, the empty spaces could be sealed with a suitable material, for example silicone. In this way, external agents like water, dust, etc., are prevented from entering into the rim 12 of the wheel 10.

Figures 9 and 10 illustrate a different embodiment of a plate, numbered with 50', without a collar but provided with the other characteristics described above (and indicated by the same reference numerals). Of course, other different shapes could be used.

The spoke attachment element 33 comprises a simple widened flattened head 62, protruding with respect to the stem 31 and formed integral with it.

Assembling of the just described wheel 10 preferably takes place in the following way, with the help of a false-spoke 16, which comprises a stem 61 with a threaded portion 62 analogous to the threaded portion 34 of the stem 31 of a spoke 13. In particular, see figures 1-4.

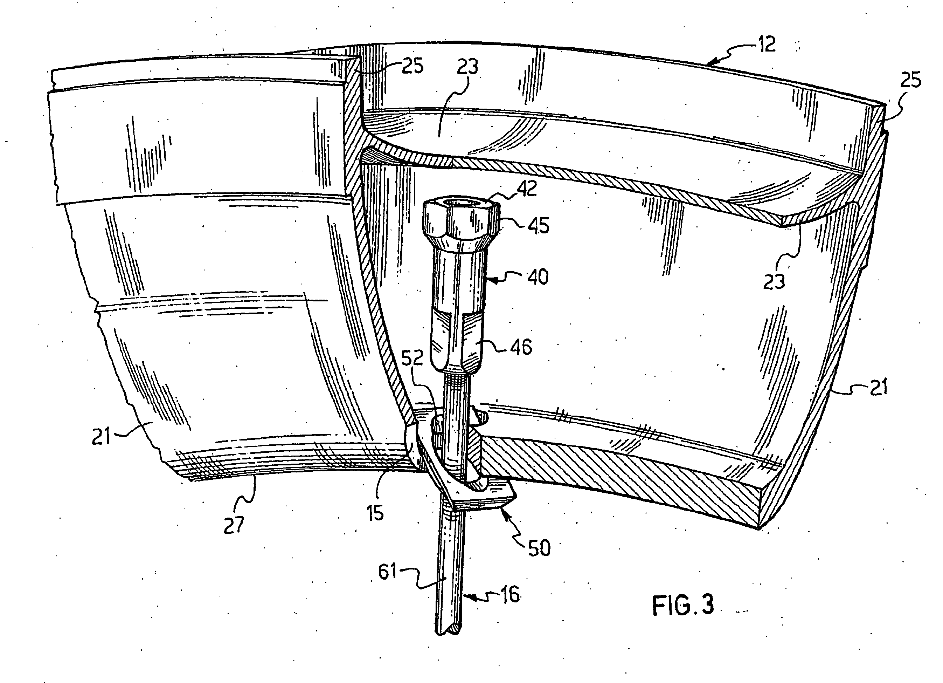

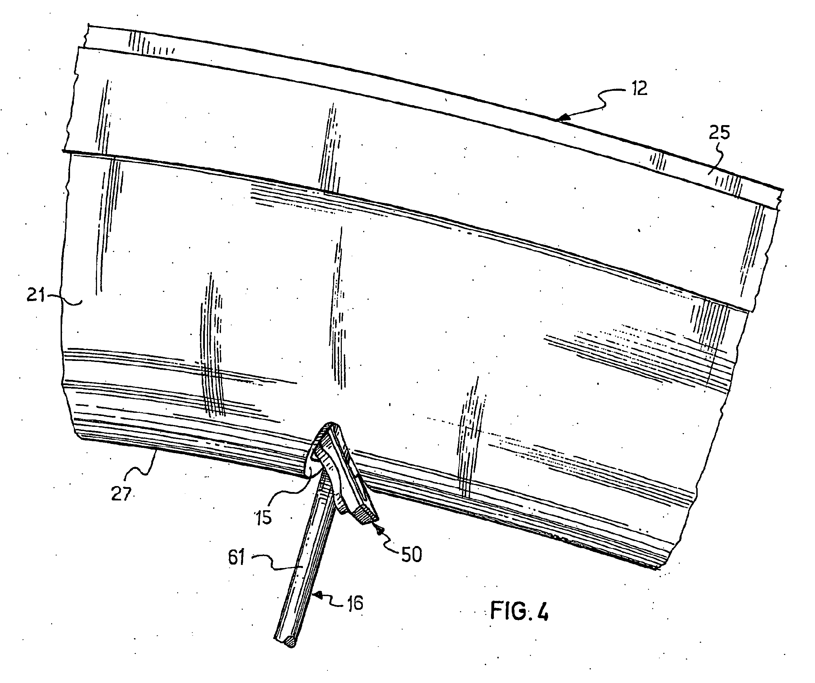

Initially, the spoke attachment elements 32 are provided. In this step, to ease the subsequent steps, the nipple 40 with the plate 50 (correctly inserted on the shank 41 of the nipple 40) is mounted on the false-spoke 16. By displacing the plate 50 above the false-spoke 16, it is possible to incline the plate 50 itself and hold it inclined against the false-spoke 16, arranging it with its long side along the false-spoke 16 and exploiting the clearance between the hole 51 and the stem 31 and the notches 52. This condition, illustrated in figures 1-4, corresponds to a first configuration of the spoke attachment element 32, in which it is possible to insert the spoke attachment element 32 in the inner chamber 26 of the rim 12 through the seat 15. Indeed, the plate 50 inclined in the aforementioned manner has a bulk compatible with the seat 15, as illustrated in detail mainly in figures 3 and 4.

When the plate 50 with the rest of the spoke attachment element 32 is completely inserted in the inner chamber 26, just the release of the plate 50 is sufficient to make it take on a second configuration no longer inclined, and it is then sufficient to apply a traction to ensure that the plate 50 (guided by the collar 53 and by the surrounding shape of the inside of the chamber 26) is' arranged facing the seat 15. The nipple 40 has its head 42 held in the chamber 26 by the plate 50 and its shank 41 protruding from the seat 15.

At this point, if assembling a single spoke 13 in an already complete wheel 10 (e.g. to replace a broken spoke), it shall be necessary to unscrew the false-spoke 16 from the nipple 40 and to screw in the spoke 13 in its place, said spoke 13 having previously been attached to the hub 11 by simply slipping the stem 31 in a suitable hole 20 on the hub 11, leaving the enlarged head 62 attached behind such a hole 20. It should be noted that the mutual screwing of spoke 13 and nipple 40 takes place by rotating not the spoke 13, which is locked on the hub 11, but rather the nipple 40, which is free to rotate.

On the other hand, if making a complete wheel 10, it is appropriate to hold the nipple 40 in a position facing from the seat 15, through a suitable holding element, e.g. an elastic ring 17, and to then remove the false-spoke 16. In the same way, one should proceed to position all the nipples 40.

When the rim 12 is provided with all the nipples 40 in facing position from the respective seats 15, one can proceed and assemble onto the hub 11. For such a purpose, a hub 11 shall be also arranged with all the spokes 13 attached. One after another, all the spokes 13 can then be screwed into the respective nipples 40, until the wheel 10 is completed. When coupling of the spokes 13 to the nipples 40 is completed, one can proceed to spokes tensioning, by acting in rotation upon the polygonal surfaces 46 of the nipples 40.

In the just described assembling procedure, it is also possible to use a normal spoke 13 instead of the false-spoke 16, and in the same identical way. Such a spoke 13, during this anomalous use thereof, is clearly free, not bound to the hub 11.

The stem 61 of the false-spoke 16, for reason of simplicity, can have a section which is the same as that of the spoke 13. Preferably, such a stem 61 has the smallest possible section, compatible with the requirement of keeping a certain stiffness as well as of including the threaded portion 62, so as to allow the maximum deviation of the plate 50. Moreover, it can be provided that the heads 42 and 142 of the nipple 40 and of the barrel 140, be cut along two ends, so as to obtain oblong sections. With these two provisions, openings 15 of a very small size can be formed in the rim 12.

The invention just described is, of course, susceptible of many different embodiments.

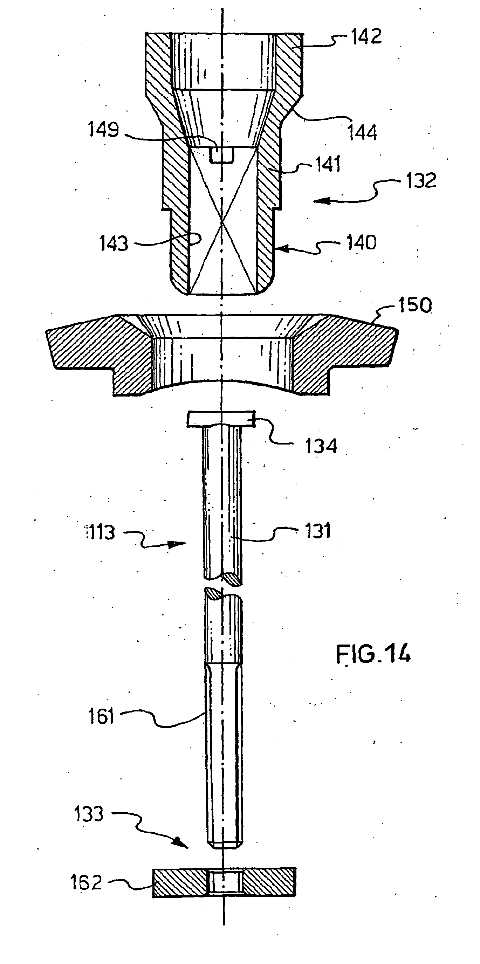

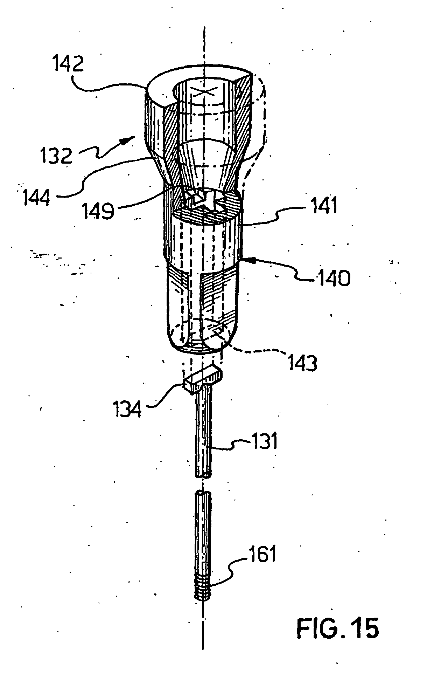

In a different embodiment, illustrated in figures 14 and 15, the spoke attachment element (indicated with 132) towards the rim 12 comprises a plate 150 (equal to the plate 50) and a barrel 140. The barrel 140 has a shank 141, elongated in the direction of the spoke 113 to which it is coupled, and a head 142 protruding from the shank 141. The shank 141 is provided with an axial inner hole 143, with a rectangular section. The head 142 has a smooth conical contact surface 144 with the plate 150. The spoke 113 has a stem 131 and attaches to the barrel 140 through its own hammer-head 134, engaged in an attachment seat 149 formed transversally to the opening 143 of the barrel 140. The barrel 140 thus forms a protruding head of the spoke attachment element 132, which rests upon the plate 150.

Unlike the nipple, the barrel 140 allows just attachment and not tension adjustment. Consequently, the spoke 113 is provided at the other end (towards the hub 11) with a spoke attachment element 133 which allows such an adjustment, e.g. a threaded coupling between a threading 161 on the stem 131 and a threaded plate 162.

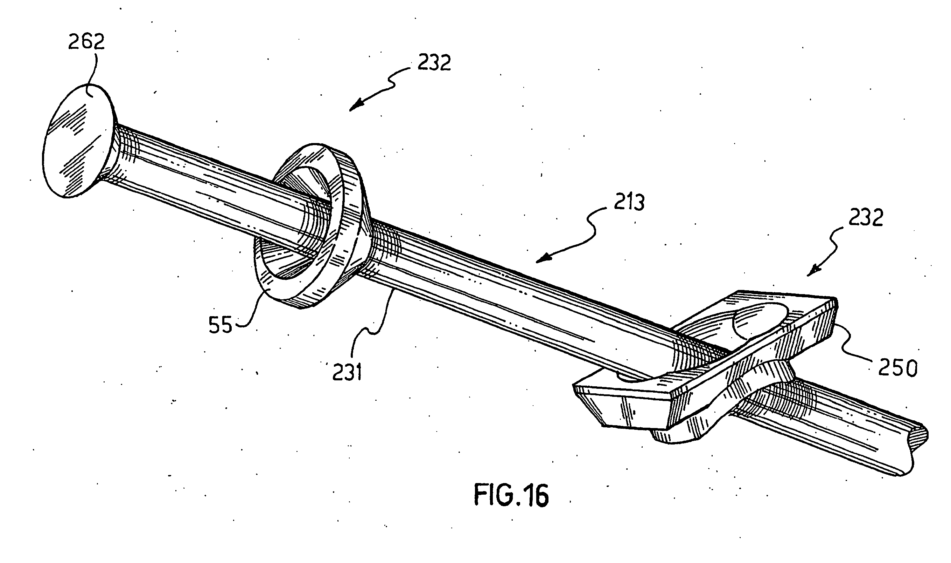

Another different embodiment is illustrated in figure 16. In this case, the spoke 213 is so to say inverted with respect to the spoke 13: indeed, the spoke attachment element 232 towards the rim 12 comprises - besides a plate 250 equal to the plate 50 - a widened head 262, protruding with respect to the stem 231 and formed integral with it, whereas the spoke attachment element towards the hub (not shown) must allow tension adjustment, in the same way as the spoke attachment element 133 of the previous embodiment.

In all of the aforementioned embodiments, the plate can possibly be provided with an auxiliary washer 55, placed between the plate and the head of the spoke attachment element. Such a washer 55 is illustrated in the embodiment of figure 16, but it can be provided in all the other embodiment. Its function is that of allowing a wider hole on the plate, so as to allow the plate itself to take on a more inclined position in the first condition.

## Claims

1. Spoked wheel (10) for a bicycle, comprising
- a rim (12),
- a hub (11),
- a plurality of spokes (13) tensed between the rim and the hub, each provided with a spoke attachment element (32, 132, 232) for attachment to the rim,
- a plurality of seats (15), such seats being openings formed in the rim, each to house one of said spoke attachment elements,
wherein the shape and size of the spoke attachment elements and of the seats of the rim are such that:
- the spoke attachment element is suitable for taking up a first configuration in which its insertion through the seat is possible;
- the spoke attachment element inserted in the seat is in a second configuration in which it is not possible to remove such a spoke attachment element through the seat,
wherein:
- the spoke attachment element (32, 132, 232) comprises a widened head (42, 142, 262) and a contact plate (50, 150, 250) provided with a hole (51);
- the hole in the plate is narrow enough to prevent the slipping of the head from the plate,
**characterized in that**
the hole in the plate is large enough to allow the plate to take on both an attachment position substantially perpendicular to the spoke in the second configuration of the spoke attachment element, and an insertion position inclined with respect to the attachment position in the first configuration of the spoke attachment element.

2. Wheel according to claim 1, wherein the rim has two sides (21) joined together on a base (22) and a bridge (23) extending between the two sides so as to define an inner chamber (26) enclosed between the bridge, the sides and the base, the openings of the seats being formed in the base, open to the inner chamber.

3. Wheel according to claim 1 or 2, wherein:
- the spoke attachment element comprises a shank (41, 141), the widened head (42, 142) being formed on the shank.

4. Wheel according to any of claims 1, or 2, wherein the widened head (262) of the spoke attachment element is formed on the spoke (13).

5. Wheel according to claim 3, wherein in the attachment position the shank (41, 141) is free to rotate with respect to the plate, about a longitudinal axis of the spoke.

6. Wheel according to any of claims 3 to 5, wherein in the attachment position the plate (50, 150, 250) cannot rotate with respect to the rim.

7. Wheel according to any of the previous claims, wherein the seat (15) as an elongated shape.

8. Wheel according to claim 7, wherein the shape of the seat (15) is elongated in a transverse direction with respect to the circumferential extension of the rim.

9. Wheel according to any of claims 3 to 8, wherein the head has a conical contact surface (44, 144) with the plate and the plate has a corresponding conical contact surface (54) with the head.

10. Wheel according to any of claims 3 to 9, wherein the hole in the plate has at least one notch (52) for receiving the spoke in the insertion position.

11. Wheel according to any of claims 3 to 10, wherein the spoke attachment element comprises a contact washer (55) between the head and the plate.

12. Wheel according to any of claims 3 and from 5 to 11, wherein the spoke attachment element of each spoke comprises a nipple (40), in adjustable screwing engagement with the spoke, the nipple including the head and the shank and being coupled to the plate.

13. Wheel according to any of claims 3 and from 5 to 11, wherein the spoke attachment element of each spoke comprises a barrel (140), in attaching engagement with the spoke, the barrel including the head and the shank and being coupled to the plate.

14. Wheel according to any of the previous claims, comprising a sealing gasket (18) in each seat of the rim, around each spoke and/or spoke attachment element.

15. Rim of a spoked wheel according to any of claims 1 to 14, for a bicycle, comprising a plurality of seats (15) consisting of openings formed in the rim, each seat being suitable for housing a spoke attachment element, **characterised in that** the seats have an elongated shape.

16. Rim according to claim 15, wherein the shape of the seats (15) is elongated in a transverse direction with respect to the circumferential extension of the rim.

17. Rim according to any of claims 15 to 16, comprising two sides (21) joined together on a base (22) and a bridge (23) extending between the two sides so as to define an inner chamber (26) enclosed between the bridge, the sides and the base, the openings of the seats being formed in the base, open to the inner chamber.

18. Spoke set for a bicycle wheel according to any of claims 1 to 14 with a rim according to any of claims 15 to 17, comprising:
- a stem (31),
- a spoke attachment element (32, 132, 232) for attaching the spoke to the rim,
wherein:
- the spoke attachment element is suitable for taking up a first configuration in which its insertion through a seat in the rim is possible;
- the spoke attachment element is suitable for being put in a second configuration in which the removal of such a spoke attachment element through the seat is not possible
wherein:
- the spoke attachment element (32, 132, 232) comprises a widened head (42, 142, 262), and a contact plate (50, 150, 250) provided with a hole (51);
- the hole in the plate is narrow enough to prevent the slipping of the head from the plate,
**characterized in that**
the hole in the plate is large enough to allow the plate to take on both an attachment position substantially perpendicular to the spoke in the second configuration of the spoke attachment element, and an insertion position inclined with respect to the attachment position in the first configuration of the spoke attachment element,
wherein the hole in the plate has at least one notch (52) for receiving the stem of the spoke in the insertion position.

19. Spoke set according to claim 18, wherein the spoke attachment element comprises a shank (41, 141), the widened head (42, 142) being formed on the shank.

20. Spoke set according to claim 18, wherein the widened head of the spoke (262) attachment element is formed on the spoke (13).

21. Spoke set according to claim 19, wherein the shank (41, 141) is free to rotate with respect to the plate, about a longitudinal axis of the spoke.

22. Spoke set according to any of claims 19 to 21, wherein the head has a conical contact surface (44, 144) with the plate and the plate has a corresponding conical contact surface (52) with the head.

23. Spoke set according to any of claims 19 to 22, wherein the spoke attachment element comprises a contact washer (55) between the head and the plate.

24. Spoke set according to any of claims 19 and from 21 to 23, wherein the spoke attachment element of each spoke comprises a nipple (40), in adjustable screwing engagement with the spoke, the nipple including the head and the shank and being coupled to the plate.

25. Spoke set according to any of claims 19 and from 21 to 23, wherein the spoke attachment element of each spoke comprises a barrel (140), in attached engagement with the spoke, the barrel including the head and the shank and being coupled to the plate.

26. Spoke set according to any of claims 18 to 25, comprising a gasket (18) around each spoke and/or spoke attachment element, intended for sealing the seat of the rim where the spoke is mounted.

27. Process intended for manufacturing a spoked wheel, according to any of claims 1 to 14, for a bicycle, comprising the steps of:
a) providing a rim (12) with a plurality of seats (15) formed by openings in the rim, each suitable for housing a spoke attachment element (32, 132, 232),
b) providing a spoke attachment element (32, 132, 232) for the attachment to the rim;
c) having the spoke attachment element take on a first configuration,
d) in such a first configuration, inserting the spoke attachment element through a predetermined opening,
e) holding the spoke attachment element facing said predetermined opening,
f) applying a holding element (17) to the spoke attachment element held facing,
g) repeating steps b) to f) for all the spokes (13) of the wheel,
h) providing a hub (11),
k) associating all the spokes (13) of the wheel with the hub,
l) associating each spoke with a respective spoke attachment element,
m) having the spoke attachment element inserted in the seat take on a second configuration in which it cannot be removed through the seat,
n) tensioning the spoke.

28. Process according to claim 27, also comprising the step of:
b1) providing a false-spoke (16) associated with the respective spoke attachment element before having the spoke attachment element take on its first configuration.

29. Process according to claim 27, also comprising the step of:
p) removing the holding elements (17) from the spoke attachment elements.

30. Process according to any of claims 28 or 29, wherein the false-spoke has a stem (61) with a smaller section with respect to that of the spoke.

31. Kit of parts intended for cooperation with a wheel according to any of claims 1 to 14, or with a rim according to any of claims 15 to 17, to implement a process according to any of claims 27 to 30, comprising a spoke set according to claim 24 and a false-spoke (16) consisting of a stem provided with a threading (62) which matches that of the spoke set.

32. Kit according to claim 31, wherein the false-spoke (16) has the stem (61) with a smaller section with respect to that of the spoke (13).

## Patentansprüche

1. Speichenrad (10) für ein Fahrrad, enthaltend:
- eins Felge (12),
- eine Nabe (11),
- eine Vielzahl von Speichen (13), die zwischen der Felge und der Nabe gespannt sind und jeweils mit einem Speichenanbringungselement (32, 132, 232) zum Anbringen an der Felge versehen sind,
- eine Vielzahl von Sitzen (15), wobei diese Sitze Öffnungen sind, die in der Felge ausgebildet sind, um jeweils eines der Speichenanbringungselemente aufzunehmen,
wobei die Form und die Größe der Speichenanbringungselemente und der Sitze der Felge derart beschaffen sind, dass:
- sich das Speichenanbringungselement dazu eignet, eine erste Konfiguration einzunehmen, in der es durch den Sitz eingefügt werden kann;
- sich das Speichenanbringungselement, das in den Sitz eingefügt ist, In einer zweiten Konfiguration befindet, in der es nicht möglich ist, ein derartiges Speichenanbringungselement durch den Sitz zu entfernen,
wobei
- das Speichenanbringungselement (32, 132, 232) einen geweiteten Kopf (42, 142, 262) und eine Kontaktplatte (50, 150, 250) enthält, die mit einem Loch versehen ist;
- das Loch in der Platte eng genug ist, um das Rutschen des Kopfes von der Platte zu verhindern,
**dadurch gekennzeichnet, dass** das Loch in der Platte ausreichend groß ist, um es der Platte zu gestatten, sowohl eine Anbringungsstellung, die im wesentlichen senkrecht zur Speiche in der zweiten Konfiguration des Speichenanbringungselementes ist, als auch eine Einfügestellung einzunehmen, die im Bezug auf die Anbringungsstellung in der ersten Konfiguration des Speichenelementes geneigt ist.

2. Rad nach Anspruch 1, bei dem die Felge zwei Seiten (21) aufweist, die miteinander an einer Basis (22) verbunden sind und sich eine Brücke (23) zwischen den beiden Seiten derart erstreckt, dass sie eine Innenkammer (26) definiert, die zwischen der Brücke, den Seiten und der Basis eingeschlossen ist, wobei die Öffnungen der Sitze in der Basis geöffnet zur Innenkammer ausgebildet sind.

3. Rad nach Anspruch 1 oder 2, bei dem:
- das Speichenanbringungselement einen Schaft (41,141) enthält und der geweitete Kopf (42, 142) am Schaft ausgebildet ist.

4. Rad nach einem der Ansprüche 1 oder 2, bei dem der geweitete Kopf (262) des Speichenanbringungselementes an der Speiche (13) ausgebildet ist.

5. Rad nach Anspruch 3, bei dem sich in der Anbringungsstellung der Schaft (41, 141) frei im Bezug auf die Platte um eine Längsachse der Speiche drehen kann.

6. Rad nach einem der Ansprüche 3 bis 5, bei dem sich in der Anbringungsstellung die Platte (50, 150, 250) nicht im Bezug auf die Felge drehen kann.

7. Rad nach einem der vorhergehenden Ansprüche, bei dem der Sitz (15) eine längliche Form hat.

8. Rad nach Anspruch 7, bei dem die Form des Sitzes (15) in einer Querrichtung im Bezug auf die Umfangsausdehnung der Felge länglich ist.

9. Rad nach einem der Ansprüche 3 bis 8, bei dem der Kopf eine konische Kontaktfläche (44, 144) zur Platte hat und die Platte eine entsprechende Kontaktfläche (54) zum Kopf hat.

10. Rad nach einem der Ansprüche 3 bis 9, bei dem das Loch in der Platte wenigstens eine Kerbe (52) zum Aufnehmen der Speiche in der Einfügestellung hat.

11. Rad nach einem der Ansprüche 3 bis 10, bei dem das Speichenanbringungselement eine Kontaktscheibe (55) zwischen dem Kopf und der Platte enthält.

12. Rad nach einem der Ansprüche 3 und 5 bis 11, bei dem das Speichenanbringungselement jeder Speiche einen Nippel (40) in einstellbarem Schraubeingriff mit der Speiche aufweist, wobei der Nippel den Kopf und den Schaft enthält und mit der Platte gekoppelt ist.

13. Rad nach einem der Ansprüche 3 und 5 bis 11, bei dem das Speichenanbringungselement jeder Speiche einen Zylinder (140) in Anbringungseingriff mit der Speiche enthält, wobei der Zylinder den Kopf und den Schaft aufweist und mit der Platte gekoppelt ist.

14. Rad nach einem der vorhergehenden Ansprüche, enthaltend einen Dichtungsring (18) in jedem Sitz der Felge um jede Speiche und/oder jedes Speichenanbringungselement.

15. Felge eines Speichenrades nach Anspruch 1 bis 14 für ein Fahrrad, enthaltend eine Vielzahl von Sitzen (15), die aus Öffnungen bestehen, die in der Felge ausgebildet sind, wobei sich jeder Sitz dazu eignet, ein Speichenanbringungselement aufzunehmen, **dadurch gekennzeichnet, dass** die Sitze eine länglich Form haben.

16. Felge nach Anspruch 15, bei der die Form der Sitze (15) in einer Querrichtung im Bezug auf die Umfangsausdehnung der Felge länglich ist.

17. Felge nach einem der Ansprüche 15 bis 16, enthaltend zwei Seiten (21), die miteinander an einer Basis (22) verbunden sind, und eine Brücke (23), die sich zwischen den beiden Seiten erstreckt, so dass sie eine Innenkammer (26) definiert, die zwischen der Brücke, den Seiten und der Basis eingeschlossen ist, wobei die Öffnungen der Sitze in der Basis geöffnet zur Innenkammer ausgebildet sind.

18. Speichensatz für ein Fahrradrad nach Anspruch 1 bis 14 mit einer Felge nach einem der Ansprüche 15 bis 17, enthaltend:
- einen Stab (31),
- ein Speichenanbringungselement (32, 132, 232) zum Anbringen der Speiche an der Felge,
wobei:
- sich das Speichenanbringungselement dazu eignet, eine erste Konfiguration einzunehmen, in der sein Einführen durch einen Sitz in der Felge möglich ist;
- sich das Speichenanbringungselement dazu eignet, in eine zweite Konfiguration gebracht zu werden, in der das Entfernen eines derartigen Speichenanbringungselementes durch den Sitz nicht möglich ist,
wobei:
- das Speichenanbringungselement (32, 132, 232) einen geweiteten Kopf (42, 142, 262) und eine Kontaktplatte (50, 150, 250) enthält, die mit einem Loch (51) versehen ist,
- das Loch in der Platte ausreichend eng ist, um das Rutschen des Kopfes von der Platte zu verhindern,
**dadurch gekennzeichnet, dass**
das Loch in der Platte ausreichend groß ist, um es der Platte zu gestatten, sowohl eine Anbringungsstellung, die im wesentlichen senkrecht zur Speiche in der zweiten Konfiguration des Speichenanbringungselementes ist, als auch eine Einfügestellung einzunehmen, die im Bezug auf die Anbringungsstellung in der ersten Konfiguration des Speichenanbringungselementes geneigt ist,
wobei das Loch in der Platte wenigstens eine Kerbe (52) für die Aufnahme des Stabes der Speiche in der Einfügestellung aufweist.

19. Speichensatz nach Anspruch 18, bei dem das Speichenanbringungselement einen Schaft (41, 141) enthält, wobei der geweitete Kopf (42, 142) am Schaft ausgebildet ist.

20. Speichensatz nach Anspruch 18, bei dem der geweitete Kopf (262) des Speichenanbringungselementes an der Speiche (13) ausgebildet ist.

21. Speichensatz nach Anspruch 19, bei dem sich der Schaft (41, 141) frei im Bezug auf die Platte um eine Längsachse der Speiche bewegen kann.

22. Speichensatz nach einem der Ansprüche 19 bis 21, bei dem der Kopf eine konische Kontaktfläche (44, 144) zur Platte hat und die Platte eine entsprechende konische Kontaktfläche (52) zum Kopf aufweist.

23. Speichensatz nach einem der Ansprüche 19 bis 22, bei dem das Speichenanbringungselement eine Kontaktscheibe (55) zwischen dem Kopf und der Platte enthält.

24. Speichensatz nach einem der Ansprüche 19 und 21 bis 23, bei dem das Speichenanbringungselement jeder Speiche einen Nippel (40) in einstellbarem Schraubeingriff mit der Speiche enthält, wobei der Nippel den Kopf und den Schaft aufweist und mit der Platte verbunden ist.

25. Speichensatz nach einem der Ansprüche 19 und 21 bis 23, bei dem das Speichenanbringungselement jeder Speiche einen Zylinder (140) in angebrachtem Eingriff mit der Speicher enthält, wobei der Zylinder den Kopf und den Schaft enthält und mit der Platte verbunden ist.

26. Speichensatz nach einem der Ansprüche 18 bis 25, enthaltend einen Dichtungsring (18) um jede Speiche und/oder Speichenanbringungselement, der den Sitz der Felge abdichten soll, an dem die Speiche montiert ist.

27. Verfahren zum Herstellen eines Speichenrades nach einem der Ansprüche 1 bis 14 für ein Fahrrad, enthaltend folgende Schritte:
a) Bereitstellen einer Felge (12) mit einer Vielzahl von Sitzen (15), die durch Öffnungen in der Felge ausgebildet sind, die sich jeweils für die Aufnahme eines Speichenanbringungselementes (32, 132, 232) eignen;
b) Bereitstellen eines Speichenanbringungselementes (32, 132, 232) für die Anbringung an der Felge;
c) Bewirken, dass das Speichenanbringungselement eine erste Konfiguration einnimmt;
d) in einer derartigen Konfiguration, Einfügen des Speichenanbringungselementes durch eine vorbestimmte Öffnung;
e) Halten des Spaichenanbringungselementes, das der vorbestimmten Öffnung zugewandt ist;
f) Anbringen eines Halteelementes (17) am zugewandten Speichenanbringungselement;
g) Wiederholen der Schritte b) bis f) für sämtliche Speichen (13) des Rades;
h) Bereitstellen einer Nabe (11);
k) Zuordnen sämtlicher Speichen (13) des Rades zur Nabe;
l) Zuordnen jeder Speiche zu einem entsprechenden Speichenanbringungselement;
m) Bewirken, dass das Speichenanbringungselement, das in den Sitz eingefügt ist, eine zweite Konfiguration einnimmt, in der es durch den Sitz nicht entfernt werden kann;
n) Spannen der Speiche.

28. Verfahren nach Anspruch 27, weiterhin enthaltend folgenden Schritt:
b1) Bereitstellen einer Fehlspeiche (16), die dem jeweiligen Speichenanbringungselement zugeordnet ist, bevor das Speichenanbringungselement seine erste Konfiguration einnimmt.

29. Verfahren nach Anspruch 27, weiterhin enthaltend folgenden Schritt:
p) Entfernen der Halteelemente (17) aus den Speichenanbringungselementen.

30. Verfahren nach einem der Ansprüche 28 oder 29, bei dem die Fehlspeiche einen Stab (61) mit einem geringeren Querschnitt im Bezug auf jenen der Speiche enthält.

31. Bauteilsatz für das Zusammenwirken mit einem Rad nach einem der Ansprüche 1 bis 14 oder mit einer Felge nach einem der Ansprüche 15 bis 17, um ein Verfahren nach einem der Ansprüche 27 bis 30 anzuwenden, enthaltend einen Speichensatz nach Anspruch 24 und eine Fehlspeiche (16), die aus einem Stab besteht, der mit einem Gewinde (62) versehen ist, das mit jenem des Speichensatzes zusammenpasst.

32. Bauteilsatz nach Anspruch 31, bei dem die Fehlspeiche (16) einen Stab (61) hat, der einen geringeren Durchmesser im Bezug auf jenen der Speiche (13) aufweist.

## Revendications

1. Roue à rayons (10) destinée à une bicyclette, comprenant
- une jante (12),
- un moyeu (11),
- une pluralité de rayons (13) tendus entre la jante et le moyeu, chacun muni d'un élément de fixation de rayon (32, 132, 232) en vue d'une fixation à la jante,
- une pluralité de sièges (15), ces sièges étant des ouvertures formées dans la jante, chacun destiné à loger l'un desdits éléments de fixation de rayon,
dans laquelle la forme et la taille des éléments de fixation de rayon et des sièges de la jante sont telles que :
- l'élément de fixation de rayon est agencé pour prendre une première configuration dans laquelle son insertion au travers du siège est possible,
- l'élément de fixation de rayon inséré dans le siège se trouve selon une seconde configuration dans laquelle il n'est pas possible de retirer un tel élément de fixation de rayon au travers du siège,
dans laquelle :
- l'élément de fixation de rayon (32, 132, 232) comprend une tête élargie (42, 142, 262) et une plaque de contact (50, 150, 250) munie d'un trou (51),
- le trou dans la plaque est suffisamment étroit pour empêcher le coulissement de la tête hors de la plaque,
**caractérisée en ce que**
le trou dans la plaque est suffisamment grand pour permettre à la plaque de prendre à la fois une position de fixation sensiblement perpendiculaire au rayon dans la seconde configuration de l'élément de fixation de rayon et une position d'insertion inclinée par rapport à la position de fixation dans la première configuration de l'élément de fixation de rayon.

2. Roue selon la revendication 1, dans laquelle la jante comporte deux flancs (21) qui sont réunis sur une base (22) ainsi qu'un pont (23) s'étendant entre les deux flancs de façon à définir un compartiment intérieur (26) enfermé entre le pont, les flancs et la base, les ouvertures des sièges étant formées dans la base et débouchant dans vers le compartiment intérieur.

3. Roue selon la revendication 1 ou 2, dans laquelle :
- l'élément de fixation de rayon comprend une tige (41, 141), la tête élargie (42, 142) étant formée sur la tige.

4. Roue selon la revendication 1 ou 2, dans laquelle la tête élargie (262) de l'élément de fixation de rayon est formée sur le rayon (13).

5. Roue selon la revendication 3, dans laquelle, dans la position de fixation, la tige (41, 141) peut tourner librement par rapport à la plaque autour d'un axe longitudinal du rayon.

6. Roue selon l'une quelconque des revendications 3 à 5, dans laquelle, dans la position de fixation, la plaque (50, 150, 250) ne peut pas tourner par rapport à la jante.

7. Roue selon l'une quelconque des revendications précédentes, dans laquelle le siège (15) présente une forme allongée.

8. Roue selon la revendication 7, dans laquelle la forme du siège (15) est allongée dans une direction transversale par rapport à l'extension circonférentielle de la jante.

9. Roue selon l'une quelconque des revendications 3 à 8, dans laquelle la tête présente une surface de contact (44, 144) conique avec la plaque, et dans laquelle la plaque présente une surface de contact (54) conique correspondant avec la tête.

10. Roue selon l'une quelconque des revendications 3 à 9, dans laquelle le trou dans la plaque comporte au moins une encoche (52) destinée à recevoir le rayon dans la position d'insertion.

11. Roue selon l'une quelconque des revendications 3 à 10, dans laquelle l'élément de fixation de rayon comprend une rondelle de contact (55) entre la tête et la plaque.

12. Roue selon l'une quelconque des revendications : 3 et de 5 à 11, dans laquelle l'élément de fixation de rayon de chaque rayon comprend un manchon fileté (40) se trouvant en prise par vissage ajustable avec le rayon, le manchon fileté incluant la tête et la tige et étant raccordé à la plaque.

13. Roue selon l'une quelconque des revendications : 3 et de 5 à 11, dans laquelle l'élément de fixation de rayon de chaque rayon comprend un cylindre (140) en prise de fixation avec le rayon, le cylindre incluant la tête et la tige et étant raccordé à la plaque.

14. Roue selon l'une quelconque des revendications précédentes, comprenant un joint d'étanchéité (18) dans chaque siège de la jante autour de chaque rayon et/ou autour de chaque élément de fixation de rayon.

15. Jante d'une roue à rayons conforme à l'une quelconque des revendications 1 à 14, destinée à une bicyclette, comprenant une pluralité de sièges (15) consistant en des ouvertures formées dans la jante, chaque siège convenant au logement d'un élément de fixation de rayon, **caractérisée en ce que** les sièges présentent une forme allongée.

16. Jante selon la revendication 15, dans laquelle la forme des sièges (15) est allongée dans une direction transversale par rapport à l'extension circonférentielle de la jante.

17. Jante selon l'une quelconque des revendications 15 à 16, comprenant deux flancs (21) réunis sur une base (22) ainsi qu'un pont (23) s'étendant entre les deux flancs de façon à définir un compartiment intérieur (26) enfermé entre le pont, les flancs et la base, les ouvertures des sièges étant formées dans la base, et débouchant dans le compartiment intérieur.

18. Ensemble de rayons destiné à une roue de bicyclette selon l'une quelconque des revendications 1 à 14, comportant une jante conforme à l'une quelconque des revendications 15 à 17, comprenant :
- une tige (31),
- un élément de fixation de rayon (32, 132, 232) destiné à fixer le rayon à la jante,
dans lequel :
- l'élément de fixation de rayon est agencé pour prendre une première configuration dans laquelle son insertion au travers d'un siège de la jante est possible
- l'élément de fixation de rayon est agencé pour être placé selon une seconde configuration dans laquelle le retrait d'un tel élément de fixation de rayon au travers du siège n'est pas possible,
dans lequel :
- l'élément de fixation de rayon (32, 132, 232) comprend une tête élargie (42, 142, 262) et une plaque de contact (50, 150, 250) munie d'un trou (51),
- le trou dans la plaque est suffisamment étroit pour empêcher le coulissement de la tête de la plaque,
**caractérisé en ce que**
le trou dans la plaque est suffisamment grand pour permettre à la plaque de prendre à la fois une position de fixation sensiblement perpendiculaire au rayon dans la seconde configuration de l'élément de fixation de rayon et une position d'insertion inclinée par rapport à la position de fixation dans la première configuration de l'élément de fixation de rayon
dans lequel le trou dans la plaque comporte au moins une encoche (52) destinée à recevoir la tige du rayon dans la position d'insertion.

19. Ensemble de rayons selon la revendication 18, dans lequel l'élément de fixation de rayon comprend une tige (41, 141) la tête élargie (42, 142) étant formée sur la tige.

20. Ensemble de rayons selon la revendication 18, dans lequel la tête élargie de l'élément de fixation de rayon (262) est formée sur le rayon (13).

21. Ensemble de rayons selon la revendication 19, dans lequel la tige (41, 141) peut tourner librement par rapport à la plaque autour d'un axe longitudinal du rayon.

22. Ensemble de rayons selon l'une quelconque des revendications 19 à 21, dans lequel la tête présente une surface de contact (44, 144) conique avec la plaque et dans laquelle la plaque présente une surface de contact (52) conique correspondant avec la tête.

23. Ensemble de rayons selon l'une quelconque des revendications 19 à 22, dans lequel l'élément de fixation de rayon comprend une rondelle de contact (55) entre la tête et la plaque.

24. Ensemble de rayons selon l'une quelconque des revendications : 19 et de 21 à 23, dans lequel l'élément de fixation de rayon de chaque rayon comprend un manchon fileté (40) en prise par vissage ajustable avec le rayon, le manchon fileté incluant la tête et la tige et étant raccordé à la plaque.

25. Ensemble de rayons selon l'une quelconque des revendications : 19 et de 21 à 23, dans lequel l'élément de fixation de rayon de chaque rayon comprend un cylindre (140) en prise de fixation avec le rayon, le cylindre incluant la tête et la tige et étant raccordé à la plaque.

26. Ensemble de rayons selon l'une quelconque des revendications 18 à 25, comprenant un joint d'étanchéité (18) autour de chaque rayon et/ou autour de chaque élément de fixation de rayon, prévu pour rendre étanche le siège de la jante lorsque le rayon est monté.

27. Procédé prévu pour fabriquer une roue à rayons conforme à l'une quelconque des revendications 1 à 14, destinée à une bicyclette, comprenant les étapes consistant à :
a) munir une jante (12) d'une pluralité de sièges (15) formés par des ouvertures dans la jante, chacun convenant au logement d'un élément de fixation de rayon (32, 132, 232),
b) prévoir un élément de fixation de rayon (32, 132, 232) en vue de la fixation à la jante,
c) faire prendre une première configuration à l'élément de fixation de rayon,
d) selon une première configuration de ce type, insérer l'élément de fixation de rayon au travers d'une ouverture prédéterminée,
e) maintenir l'élément de fixation de rayon en face de ladite ouverture prédéterminée,
f) appliquer un élément de maintien (17) à l'élément de fixation de rayon maintenu en face,
g) répéter les étapes b) à f) pour chacun des rayons (13) de la roue,
h) fournir un moyeu (11),
k) associer la totalité des rayons (13) de la roue au moyeu,
l) associer chaque rayon à un élément de fixation de rayon respectif,
m) faire prendre à l'élément de fixation de rayon inséré dans le siège une seconde configuration dans laquelle il ne peut pas être retiré au travers du siège,
n) mettre sous tension le rayon.

28. Procédé selon la revendication 27, comprenant également l'étape consistant à :
b1) prévoir un faux rayon (16) associé à l'élément respectif de fixation de rayon avant que l'élément de fixation de rayon prenne sa première configuration.

29. Procédé selon la revendication 27, comprenant également l'étape consistant à :
p) retirer les éléments de maintien (17) des éléments de fixation de rayon.

30. Procédé selon l'une quelconque des revendications 28 ou 29, dans lequel le faux rayon comporte une tige (61) présentant une section inférieure par rapport à celle du rayon.

31. Kit de pièces prévues pour assurer une coopération avec une roue conforme à l'une quelconque des revendications 1 à 14 ou avec une jante conforme à l'une quelconque des revendications 15 à 17 afin de mettre en oeuvre un procédé conforme à l'une quelconque des revendications 27 à 30, comprenant un ensemble de rayons conforme à la revendication 24 et un faux rayon (16) constitué d'une tige munie d'un filetage (62) qui correspond à celui de l'ensemble de rayons.

32. Kit selon la revendication 31, dans lequel la tige (61) du faux rayon (16) présente une section inférieure par rapport à celle du rayon (13).
